(19) Europäisches Patentamt
European Patent Office
Office européen des brevets

(11) EP 4 485 377 A1

(12) EUROPEAN PATENT APPLICATION

(43) Date of publication:
01.01.2025 Bulletin 2025/01

(51) International Patent Classification (IPC):
G06V 10/80 (2022.01)        G06V 20/58 (2022.01)
G06F 18/25 (2023.01)

(21) Application number: 23191273.4

(22) Date of filing: 14.08.2023

(52) Cooperative Patent Classification (CPC):
G06V 20/58; G06F 18/256; G06V 10/811

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.06.2023 US 202318342629

(71) Applicant: Aptiv Technologies AG
8200 Schaffhausen (CH)

(72) Inventors:
• Sajwan, Ashish
Woodland Hills, CA, 6200 (US)
• Wang, Xiaohui
Oak Park, CA, 91377 (US)

(74) Representative: Manitz Finsterwald
Patent- und Rechtsanwaltspartnerschaft mbB
Martin-Greif-Strasse 1
80336 München (DE)

(54) **FUSION OF OBJECT CLASSES**

(57) This document describes techniques and systems for fusion of object classes. Sensor data, related to an object, can be obtained from different types of sensor systems. Using techniques based on a Dempster Shafer framework, masses of each potential object class based on data from a respective sensor can be calculated. The respective masses of each potential object class, based on the different sensor systems, can be combined to generate a fused mass for each potential object class. Probabilities for each potential object class can be calculated based on the respective fused masses. An assigned object class for the object can be selected based on a probability exceeding some decision threshold. This assigned object class may then be available for an object tracker, an object fusion system, or other vehicle system resulting in a safer driving experience.

FIG. 1

EP 4 485 377 A1

**Description**

**BACKGROUND**

Many autonomous and semi-autonomous vehicles are integrated with a multimodal sensor suite. That is, these vehicles may include vision systems (e.g., camera systems), radar systems, light detection and ranging (LiDAR) systems, and the like. Generally, data obtained from the vision systems has been heavily relied on to classify objects in the field of view of the sensor(s). The accuracy of these classifications may be affected by the limitations of the vision system. More accurate classification of objects may result in a safer and more enjoyable experience for passengers of these vehicles.

**SUMMARY**

This document describes techniques, systems, and methods for fusion of object classes. For example, this document describes a method that includes obtaining first sensor data from a first sensor and second sensor data from a second sensor that is a different type of sensor than the first sensor, with the first sensor and the second sensor having at least partially overlapping fields of view. The method further includes determining, for an object in the at least partially overlapping fields of view, a set of first masses based on the first sensor data, each first mass in the set of first masses being associated with assigning a respective object class from a set of potential object classes to the object. The method further includes determining, for the object in the at least partially overlapping fields of view, a set of second masses based on the second sensor data, each second mass in the set of second masses being associated with assigning a respective object class from the set of potential object classes to the object. The method further includes combining the respective first mass and the respective second mass of the respective object class from the set of potential object classes to generate a fused mass for the respective object class. The method further includes determining, based on the fused mass of each object class in the set of potential object classes, a probability for each object class being an assigned object class for the object. The method further includes selecting, based on a respective probability of an object class exceeding a decision threshold, the respective object class associated with the respective probability to be the assigned object class of the object. The method further includes outputting, to a semi-autonomous or autonomous driving system of a vehicle, the assigned object class of the object to control operation of the vehicle.

These and other described techniques may be performed by hardware or a combination of hardware and software executing thereon. For example, a computer-readable storage media (CRM) may have instructions stored thereon and that when executed configure a processor to perform the described techniques. A system may include means for performing the described techniques. A processor or processor unit may be part of a system that is configured to execute the methods and techniques described herein.

This Summary introduces simplified concepts related to fusion of object classes, further described in the Detailed Description and Drawings. This Summary is not intended to identify essential features of the claimed subject matter, nor is it intended for use in determining the scope of the claimed subject matter. Although primarily described in the context of automotive systems, the techniques for fusing object classes can be applied to other applications where accuracy of the object class is desired. Further, these techniques may also be applied to other systems having multiple different detection systems.

**BRIEF DESCRIPTION OF THE DRAWINGS**

The details of fusion of object classes are described in this document with reference to the Drawings that may use same numbers to reference like features and components, and hyphenated numbers to designate variations of these like features and components. The Drawings are organized as follows:

FIG. 1 illustrates an example environment 100 in which fusion of object classes may be applied, in accordance with techniques of this disclosure;
FIG. 2 illustrates an example automotive system 200 configured to perform fusion of object classes, in accordance with techniques of this disclosure;
FIG. 3 illustrates an example conceptual diagram illustrating techniques to perform fusion of object classes, in accordance with this disclosure; and
FIG. 4 illustrates an example method for fusion of object classes, in accordance with techniques of this disclosure.

## DETAILED DESCRIPTION

### OVERVIEW

As autonomous and semi-autonomous vehicles become more common, a need for more accurate object detection and tracking becomes necessary. An important aspect of object tracking is accurately identifying the object class of the detected objects. Traditionally, data obtained from vision systems (e.g., cameras) has primarily been used to determine object class because the vision information, compared to other sensor systems (e.g., radar systems, light detection and ranging systems (LiDAR)), has been more robust and generally captures the details required to determine the class of an object. Machine learning algorithms have increased the accuracy of object classification based on vision systems given good exposure conditions (e.g., favorable weather). This performance is adequate for many applications; however, for a safety critical and risk averse application such as autonomous driving, more accuracy is needed.

A vision system can fail under inclement weather conditions, sudden exposure changes (e.g., entering or exiting a tunnel), flares due to a low-hanging sun in the sky, objects blending into the background due to similar colors or low contrast, low light conditions (e.g., nighttime), and the like. While sensor systems, particularly radar systems and LiDAR systems, may perform better than a vision system in these conditions, and, thus, complement the vision system to create an overall robust system, their object classification performance has been traditionally poor due to computational limitations or inherent sensor information.

Currently, new algorithms have been developed to overcome these limitations of non-vision sensor systems. Combining information from different types of sensor systems may be used to more accurately determine object classes that work in a variety of environmental conditions leading to increased safety.

Object class fusion, based on different types of sensors, may be used to estimate object classes more accurately. Machine learning networks for images generally work with only RGB pixels to learn and predict object class (class and object class are used interchangeably throughout this document). In general, many networks that receive low-level sensor data for predicting object class have limited information, and prediction may be based on information from one scan. At the tracking level, more contextual information is available. For example, motion cues may be available, the size of an object may be refined over many scans, and there may be information that relates to a level of trust of the object (e.g., the object is real, the object is false due to aliasing or other reasons). A Dempster Shafer framework may be used to fuse all the contextual information from the different types of sensors to estimate object class more robustly compared to other methods, such as a Bayesian-based method.

This document describes techniques and systems for fusion of object classes. Sensor data, related to an object, can be obtained from different types of sensor systems. Using techniques based on a Dempster Shafer framework, masses of each potential object class based on data from a respective sensor can be calculated. The respective masses of each potential object class, based on the different sensor systems, can be combined to generate a fused mass for each potential object class. Probabilities for each potential object class can be calculated based on the respective fused masses. An assigned object class for the object can be selected based on a probability exceeding some decision threshold. This assigned object class may then be available for an object tracker, an object fusion system, or other vehicle system resulting in a safer driving experience.

This section describes just one example of how the described techniques, systems, and methods can perform multi-scan sensor fusion for object tracking. This document describes other examples and implementations.

### EXAMPLE ENVIRONMENT

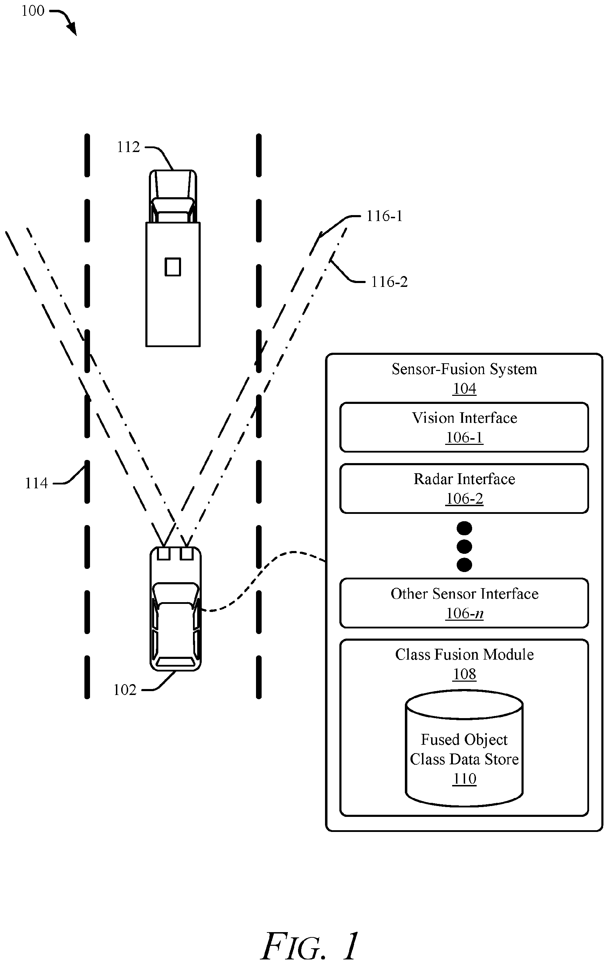

FIG. 1 illustrates an example environment 100 in which fusion of object classes may be applied, in accordance with techniques of this disclosure. Vehicle 102 can represent any apparatus or machinery, including operated and unmanned systems used for various purposes. Some non-exhaustive and non-limiting examples of the vehicle 102 include other motorized vehicles (e.g., a motorcycle, a bus, a tractor, a semi-trailer truck, watercraft, aircraft, or construction equipment).

In the depicted environment 100, the sensor-fusion system 104 is mounted to, or integrated within, the vehicle 102. Vehicle 102 can travel on a roadway 114 and use the sensor-fusion system 104 to navigate the environment 100. Objects may be in proximity to the vehicle 102. For example, FIG. 1 depicts another vehicle 112 traveling in front of and in the same direction as the vehicle 102 along the roadway 114.

With the sensor-fusion system 104, vehicle 102 has instrumental or sensor field of views 116 that encompass the other vehicle 112. The sensors (e.g., radar systems, vision systems) can have the same, similar, partially overlapping, or different instrumental fields of view 116 of the roadway 114. For example, a vision system can project an instrumental field of view 116-1, and a radar system can project an instrumental field of view 116-2. In this example, field of views 116 project forward from the vehicle 102; however, the fields of view may project from the vehicle 102 in any direction. Vehicle manufacturers can integrate at least a part of a vision system or radar system into a side mirror, bumper, roof, or any other interior or exterior location where the field of view 116 includes the roadway 114. In general, vehicle manufacturers can design the sensors' location to provide a field of view 116 that sufficiently encompasses the roadway 114 on which vehicle 102 may be traveling. For example, the sensor-fusion system 104 can monitor the other vehicle 112 (as detected by the sensor systems) on the roadway 114 in which the vehicle 102 is traveling.

The sensor-fusion system 104 includes a class fusion module 108 and one or more sensor interfaces 106, including a vision interface 106-1 and a radar interface 106-2. The sensor interfaces 106 can include additional sensor interfaces, including another sensor interface 106-n, where n represents the number of sensor interfaces. For example, the sensor-fusion system 104 can include interfaces to other sensors (e.g., lidar systems) or other vision systems or radar systems. Although not illustrated in FIG. 1, the class fusion module 108 executes on a processor or other hardware. During execution, the class fusion module 108 can fuse object classes of objects in the fields of view 116 based on sensor data obtained at the vision interface 106-1 and the radar interface 106-2. The vision interface 106-1 receives vision or camera data from one or more vision systems of the vehicle 102. The radar interface 106-2 receives radar data from one or more radar systems of the vehicle 102. In particular, the class fusion module 108 can access the vision interface 106-1 and the radar interface 106-2 to obtain the vision data and the radar data, respectively.

The class fusion module 108 configures the sensor-fusion system 104 to combine the different types of sensor data obtained from the sensor interfaces 106 (e.g., a vision-based object class of an object, a radar-based object class of the object) to predict a fused object class of each object in the field of view 116. The class fusion module 108 receives the vision-based object class and the radar-based object class via the sensor interfaces 106 from the respective sensor systems. Alternatively, the class fusion module 108 receives the different types of sensor data and determines the vision-based object class and the radar-based object class. The class fusion module 108 can combine the vision-based object class and the radar-based object class to calculate the most probable object class of the object using, for example, Dempster-Shafer theory to calculate the masses, and determine the probabilities of each potential object class. The fusion module 108 can store the fused object class (e.g., with the highest probability of being accurate) in a fused object class data store 110.

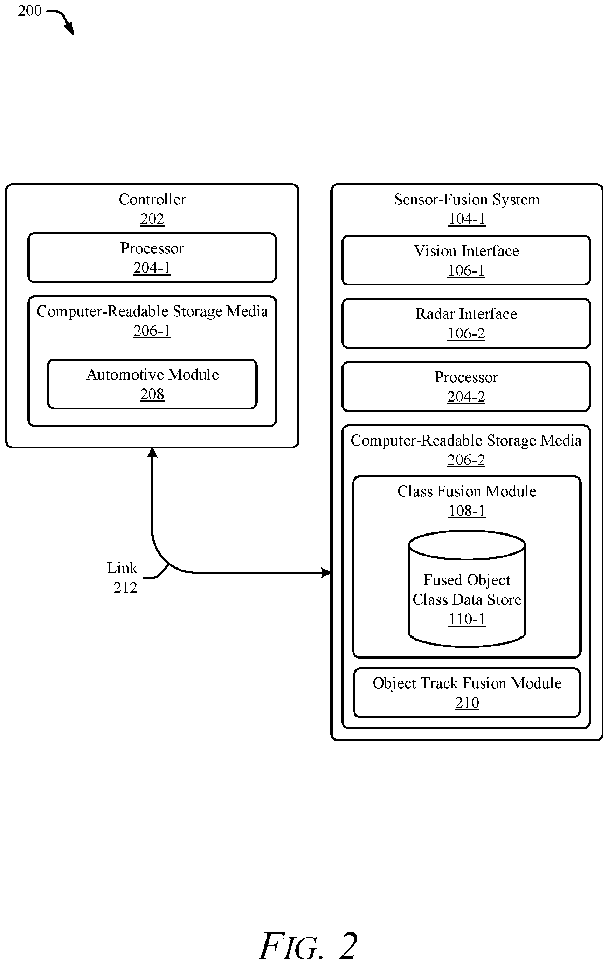

The class fusion module 108 can determine mass values for one or more potential object classes. The class fusion module 108 can also combine the mass values using the Dempster-Shafer theory to generate fused mass values. The Dempster-Shafer theory provides a framework for determining and reasoning with uncertainty among multiple hypotheses (e.g., multiple object classes). The Dempster-Shafer theory enables evidence from different sources (e.g., radar data and vision data) to be combined to arrive at a degree of belief for a hypothesis when considering all available evidence. Each given hypothesis is included in a frame of discernment. Using Dempster-Shafer fusion, the sensor-fusion system 104 can determine a belief parameter (e.g., likelihood) and a plausibility parameter (e.g., confidence) associated with each of the one or more hypotheses (e.g., each particular object class) based on the fused mass value. The average of the belief parameter and plausibility parameter provides a probability that a particular object class is the accurate object class for the object. This document describes the operations and components of the sensor-fusion system 104 and the class fusion module 108 in greater detail with respect to FIGs. 2 through 4.

Vehicle 102 can also include one or more vehicle-based systems (not illustrated in FIG. 1) that can use the fused object class from the sensor-fusion system 104 to operate the vehicle 102 on the roadway 114. For example, the fused object class can be used by the sensor-fusion system 104 to more accurately fuse object tracks. The vehicle-based systems can include an assisted-driving system and an autonomous-driving system (e.g., an Automatic Cruise Control (ACC) system, Traffic-Jam Assist (TJA) system, Lane-Centering Assist (LCA) system, and L0-L4 Autonomous Driving system). Generally, the vehicle-based systems can use the fused tracks, based on the fused object classes, provided by the sensor-fusion system 104 to operate the vehicle and perform particular driving functions. For example, the assisted-driving system can provide automatic cruise control and monitor for the presence of the other vehicle 112 in the lane or an adjacent lane in which the vehicle 102 is traveling. As another example, the assisted-driving system can provide alerts when the other vehicle 102 crosses a lane marker into the same lane as the vehicle 102.

The autonomous-driving system may move the vehicle 102 to a particular location on the roadway 114 while avoiding collisions with objects and the other vehicle 112 detected by the different systems (e.g., a radar system and a vision system) on the vehicle 102. The fused tracks provided by the sensor-fusion system 104 can provide information about the location and trajectory of the other vehicle 112 to enable the autonomous-driving system to perform a lane change or steer the vehicle 102.

EXAMPLE SYSTEMS

FIG. 2 illustrates an example automotive system 200 configured to perform fusion of object classes, in accordance with techniques of this disclosure. The automotive system 200 can be integrated within the vehicle 102 shown in FIG. 1 and is described in that context. For example, the automotive system 200 includes a controller 202 and a sensor-fusion system 104-1, which is an example of the sensor-fusion system 104 of FIG. 1. The sensor-fusion system 104-1 and the controller 202 communicate over a link 212. Link 212 may be wired or wireless and includes a communication bus in some cases. The controller 202 performs operations based on information received over the link 212, such as fused object tracks based on fused object classes for objects, output from the sensor-fusion system 104-1 as objects in the fields of view 116 are identified from processing and associating radar tracks and vision tracks.

The controller 202 includes a processor 204-1 (e.g., a hardware processor, a processing unit) and a computer-readable storage media (CRM) 206-1 (e.g., a memory, long-term storage, short-term storage, non-transitory CRM) that stores instructions for an automotive module 208.

The sensor-fusion system 104-1 includes the vision interface 106-1 and the radar interface 106-2. As discussed above, any number of other sensor interfaces 106 may be used, including a lidar interface or other sensor interface 106-n. The sensor-fusion system 104-1 may include processing hardware that includes a processor 204-2 (e.g., a hardware processor, a processing unit) and a CRM 206-2 that stores instructions associated with a class fusion module 108-1, which is an example of the class fusion module 108 of FIG. 1, and an object track fusion module 210. The class fusion module 108-1 includes a fused object class data store 110-1.

The processors 204-1 and 204-2 can be two separate processing units or a single processing unit (e.g., a microprocessor). The processors 204-1 and 204-2 can also be a pair of or a single system-on-chip of a computing device, a controller, or a control unit. The processors 204-1 and 204-2 execute computer-executable instructions stored within the CRMs 206-1 and 206-2. As an example, the processor 204-1 can execute the automotive module 208 to perform a driving function (e.g., an autonomous lane change maneuver, a semi-autonomous lane-keep feature, an ACC function, a TJA function, an LCA function, or other autonomous or semi-autonomous driving functions) or other operations of the automotive system 200. Similarly, the processor 204-2 can execute the class fusion module 108-1 and the object track fusion module 210 to infer and track objects in the fields of view 116 based on sensor data obtained from multiple different sensor interfaces 106 of the automotive system 200. The automotive module 208, when executing at the processor 204-1, can receive an indication of one or more objects (e.g., the other vehicle 112 illustrated in FIG. 1) based on output from the sensor-fusion system 104-1 generated by the class fusion module 108-1 and object track fusion module 210 combining and analyzing sensor data obtained from each of the sensor interfaces 106.

Generally, the automotive system 200 executes the automotive module 208 to perform an automotive function using outputs from the sensor-fusion system 104-1. For example, the automotive module 208 can provide automatic cruise control and monitor for objects in or near the field of view 116 to slow vehicle 102 and prevent a read-end collision with the other vehicle 112. The automotive module 208 can also provide alerts or cause a specific maneuver when the data obtained from the sensor-fusion system 104-1 indicates one or more objects are crossing in front of the vehicle 102.

For ease of simplicity, the class fusion module 108-1, the fused object class data store 110-1, and the object track fusion module 210 are described with reference primarily to the vision interface 106-1 and the radar interface 106-2, without reference to another sensor interface 106-n. However, it should be understood that the class fusion module 108-1 and the object track fusion module 210 can combine sensor data from more than just two different categories of sensors and can rely on sensor data output from other types of sensors besides just vision and radar systems.

The vision interface 106-1 outputs sensor data, which can be provided in various forms, such as a list of candidate objects being tracked, along with an initial object class for each object. Alternatively, the class fusion module 108-1 can determine an initial object class based on the sensor data obtained from the vision interface 106-1.

Like the vision interface 106-1, the radar interface 106-2 can operate independently from the vision interface 106-1 and the other sensor interfaces 106-n. The radar interface 106-2 can maintain a list of detections and corresponding detection times, which are assumed to mostly be tracking on scattered centers of vehicles and other objects it detects. Each detection typically consists of a range, range rate, and azimuth angle. There is generally more than one detection on each vehicle and object unobstructed in the field of view 116-2 and at a reasonably close range to the vehicle 102. The class fusion module 108-1 may receive an initial object class of an object from the radar interface 106-2 or determine the initial object class based on data obtained from the radar interface 106-2.

The class fusion module 108-1 can incorporate contextual information derived from the sensor data to better estimate an accurate object class for an object. This contextual information can be categorized as evidence factors and trust factors. Evidence factors include data that supports a particular class (e.g., size cues, motion cues). Non-limiting examples include size (e.g., length, width, height) of an object and motion information (e.g., velocity, acceleration, motion flags that have historic depth such as moveable, fast moveable, immobile). Trust factors include indications of whether the sensor data is believable (e.g., stability value associated with an initial object class, an existence probability related to an existence of an object, a failsafe probability related a performance of a sensor, a field of view probability related to an accuracy of the initial object class based on where in the field of view of the respective sensor the object is located). Non-limiting examples include stability of classification, probability of existence (e.g., false positives versus actual objects), information related to weather and sensor blockage, and location of the target in the field of view (e.g., object near the edges of the field of view may be less reliable).

The class fusion module 108-1 considers the contextual information and the initial object class estimate to generate an estimated object class based on each sensor. Using Dempster's rule of combination, each respective hypothetical object class based on each sensor can then be fused and an object class with the highest probability of being accurate can be assigned to the respective object and stored in the fused object class data store 110-1. The assigned object class can be used by the object track fusion module 210 to fuse object tracks based on each sensor data, generate more accurate bounding boxes, and the like.

EXAMPLE IMPLEMENTATIONS

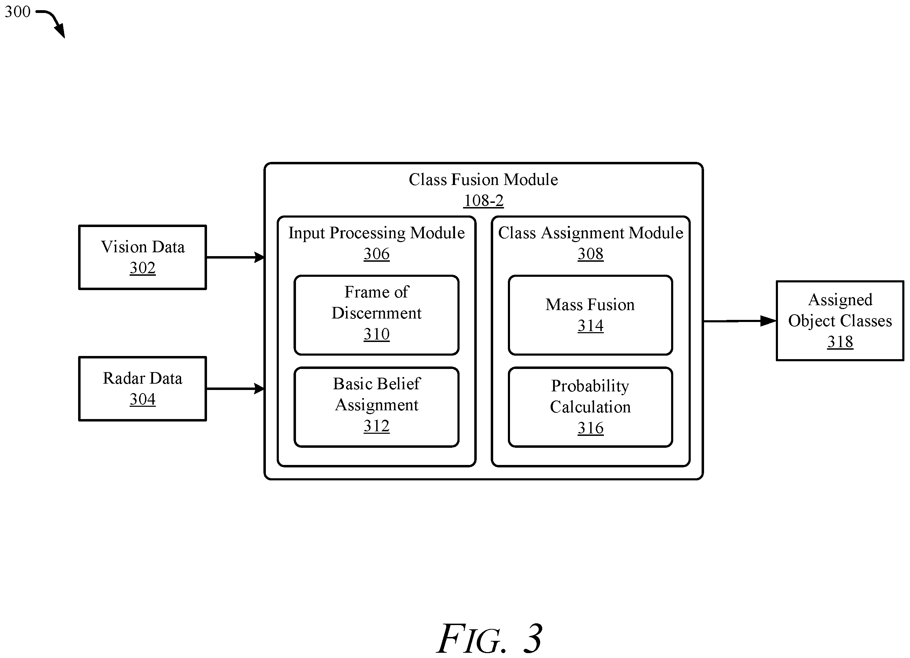

FIG. 3 illustrates an example conceptual diagram 300 illustrating techniques to perform fusion of object classes, in accordance with this disclosure. The conceptual diagram 300 includes the class fusion module 108-2, which is an example of the class fusion module 108 of FIG. 1 and the class fusion module 108-1 of FIG. 2.

Vision data 302 and radar data 304 are provided as input to the class fusion module 108-2. The vision data 302 and the radar data 304 can include an initial object class based on the respective sensor data. Alternatively, the class fusion module 108-2 can determine a respective initial object class based on the vision data 302 and the radar data 304. The class fusion module 108-2 includes an input processing module 306 and an evidence fusion module 308. The class fusion module 108-2 outputs assigned object classes 318, which can be provided to an object track fusion module (e.g., the object track fusion module 210 of FIG. 2) or to other systems that can use object classes.

The input processing module 306 includes a frame of discernment 310 and estimates a basic belief assignment (BBA) 312. The frame of discernment 310 includes a set of potential object classes. For example, one set of potential object classes can be based on the following elements (different classes may be added or removed):

$$\theta = \{car,\ truck,\ motorcycle,\ bike,\ pedestrian\}.$$

A set of potential power classes, which includes compound classes (the class names are abbreviated, c=car, tr=truck, and so forth), can be generated from $\theta$ and represents the frame of discernment 310:

$$2^\theta = \{\emptyset, \{c\}, \{t\}, \{c,t\}, \{m\}, \{b\}, \{p\}, \{m,\ b\}, \{b,\ p\}, \{m,p\}, \{undetermined\}\}.$$

$$\emptyset = null\ element$$

It should be noted that other classes and combinations of classes can be used in addition to or in place of the example classes. The potential power classes account for the lack of discernment a sensor may have between classes (e.g., {motorcycle, bicycle}). Other combinations (e.g., {truck, pedestrian}) may be pruned to avoid unnecessary calculations without degrading classification performance because discrimination between some classes is far superior to others.

The BBA 312 (e.g., the mass) is estimated, based on each sensor or object track based on the sensor data, using the object class probabilities reported by the respective sensor (e.g., first probabilities) as well as the contextual information (e.g., probabilities based on the evidence and trust factors) derived from the respective sensor's data using equation 1:

$$m_i(\{class\}) = p_i^{evidence}(\{class\})p_i^{trust}p_i(\{class\}) \qquad (1)$$
$$m\{\emptyset\} = 0$$

where:

$m$ is the mass (BBA 312),
$i$ refers to $sensor_i$,
$class \in 2^\theta$,
$p_i^{evidence}$ is the evidence probability (e.g., second probabilities) for $sensor_i$, and

$p_i^{trust}$ is the trust probability (e.g., third probabilities) for $sensor_i$.

The evidence probability can be calculated using equation 2,

$$p_i^e(\{class\}) = p_i^{size}(\{class\})p_i^{motion}(\{class\}) \qquad (2)$$

where:

$p_i^{size}$ is the probability that the estimated size (e.g., size probability) from the sensor data supports the reported class, and

$p_i^{motion}$ is the probability that the estimated motion (e.g., motion probability) from the sensor data supports the reported class (e.g., a pedestrian or a bicyclist can only move up to a certain speed).

$p_i^{size}$ can be implemented as a two-dimensional (2D) or three-dimensional (3D) Gaussian depending on whether the sensor can estimate size better in 2D or 3D and is calculated using equation 3 (3D example):

$$p_i^{size}(class) = K * \exp\left(-\frac{\left(l_i - \mu_l^{class}\right)^2}{2 * \sigma_l^{class\,2}} - \frac{(w_i - \mu_w^{class})^2}{2 * \sigma_w^{class\,2}} - \frac{\left(h_i - \mu_h^{class}\right)^2}{2 * \sigma_h^{class\,2}}\right) \tag{3}$$

$p_i^{motion}$ is calculated using equation 4:

$$p_i^{motion}(class) = \frac{1}{1 + e^{(|v_i| - v_0)}} \tag{4}$$

The trust probability can be calculated using equation 5:

$$p_i^{trust}(\{class\}) = p_i^{poe}(\{class\})p_i^{failsafe}(\{class\})\, p_i^{fov}(\{class\}) \tag{5}$$

where:

$p_i^{poe}$ is the probability of confidence in the existence of the object detected by the sensor such that the reported class may be trusted. For example, if a radar or camera reports a ghost object due to some phenomena, such as aliasing, the class cannot be trusted,

$p_i^{failsafe}$ is the probability (e.g., failsafe probability) that the sensor is healthy and in good position to perform in the given weather. Using $p_i^{failsafe}$ may ensure that the strength of each sensor complements the weakness of the other sensor. For example, a camera may be less trusted during night or in heavy rain than a radar, or a blocked radar may be less trusted. $p_i^{failsafe}$ includes different severity levels of night (e.g., darkness), rain, fog, splashes, low sun, sun rays, double bounce, blurred images, sensor blockage, and/or sensors being out of calibration, and

$p_i^{fov}$ is the probability that, given the location of the object in the sensor field of view, how much can the reported class be trusted. For example, some sensors may have degraded performance near the boundaries (e.g., edges) of their field of view that adversely affects the estimation of the object class of objects in those locations. For these sensors, there may be a high probability assigned for most of the field of view that declines as the object approaches either side. A zero probability may be assigned once the object moves outside the field of view.

The class assignment module 308 includes mass fusion 314 and a probability calculation 316. Mass fusion 314 may be performed to fuse the related masses (e.g., BBA 312), calculated with equation 1, using Dempster's combination rule:

$$m_f(\{class\}) = \frac{\sum_{A\cap B=class} m_i(A)\,m_j(B)}{1 - \sum_{A\cap B=\emptyset} m_i(A)\,m_j(B)} \qquad (6)$$

The probability calculation 316 is based on the fused masses found from applying equation 6. A belief parameter (e.g., a lower limit of probability) may be calculated for each potential object class using equation 7:

$$Bel_f(\{class\}) = \sum_{A\subseteq\{class\},\, A\neq\emptyset} m_f(A) = m_f(\{class\}) \qquad (7)$$

All subsets in the set of potential object classes that include a particular object class are evaluated, and the subsets that include an element having a zero value (e.g., the null element/object class) are pruned. The fused masses of all the subsets that include the particular object class are then summed.

Additionally, a plausibility parameter (e.g., an upper limit of probability) may be calculated for each potential object class using equation 8:

$$Pl_f(\{class\}) = \sum_{A\cap\{class\}\neq\emptyset} m_f(A) \qquad (8)$$

The non-zero intersections of a particular object class with other object classes are determined, and the fused masses of all the object classes having a non-zero intersection are summed.

And the class probability can be calculated by averaging the belief parameter and the plausibility parameter as such:

$$p_f(\{class\}) = \frac{Bel_f(\{class\}) + Pl_f(\{class\})}{2} \qquad (9)$$

To ensure that the object class is stable over time (e.g., temporally), a low-pass filter can be implemented:

$$p^{t+1}(\{class\}) = K * p_f^{t+1}(\{class\}) + (1-K) * p^t(\{class\}) \qquad (10)$$

where,

$K \in [0,1]$ is the filter gain and
$p^{t+1}(\{class\})$ is the class probability for $t + 1$ frames/look-indices.

The assigned object classes 318 may then be assigned to each object based on the class probability exceeding a decision threshold (e.g., assigned based on highest probability, assigned based on probability exceeding a threshold value). In this manner, a more accurate class may be assigned to an object using contextual information over time.

EXAMPLE METHODS

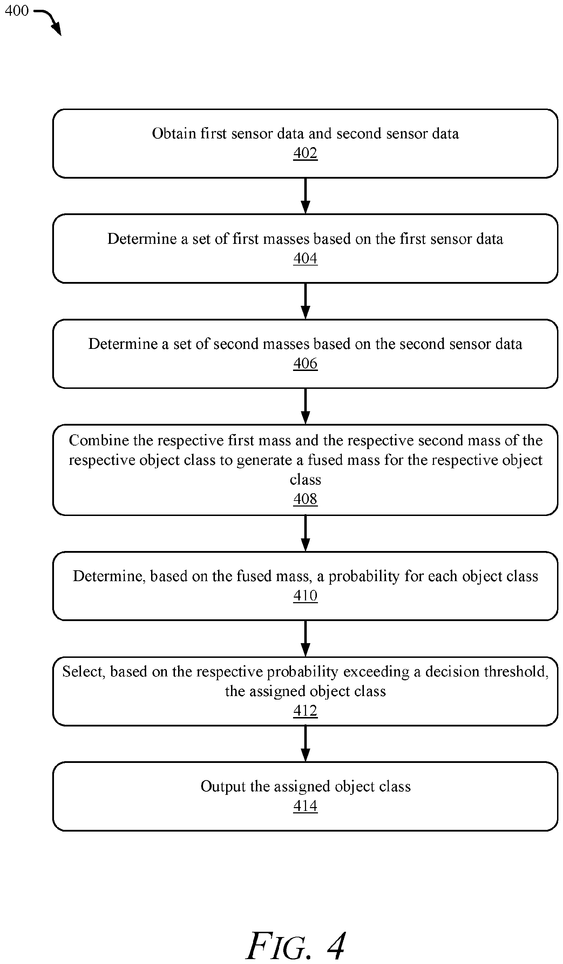

FIG. 4 illustrates an example method 400 for fusion of object classes, in accordance with techniques of this disclosure. Method 400 is shown as sets of operations (or acts) performed, but not necessarily limited to the order or combinations in which the operations are shown herein. Further, any of one or more of the operations may be repeated, combined, or reorganized to provide other methods.

At 402, first sensor data from a first sensor and second sensor data from a second sensor that is a different type of sensor than the first sensor are obtained by a class fusion module (e.g., the class fusion module 108, 108-1, 108-2, respectively of FIGs. 1 to 3). The first sensor and second sensor may be a radar system, camera system, LiDAR system, or other detection sensor. The first sensor and the second sensor may have at least partially overlapping fields of view.

At 404, a set of first masses, based on the first sensor data, is determined for an object in the fields of view of the sensors. Each first mass in the set of first masses is associated with assigning a respective object class from a set of potential object classes to the object. That is, a mass (e.g., probability) is determined for each object class in a set of potential object classes. The set of potential object classes may include single classes such as {car}, {truck} and compound classes such as {car, truck} (e.g., $\theta$, $2\theta$). Each first mass may be calculated using equation 1.

Similar to 404, at 406, a set of second masses, based on the second sensor data, is determined for the object in the fields of view of the sensors. Each second mass may, likewise, be calculated using equation 1.

At 408, the respective first mass and the respective second mass of the respective object class from the set of potential object classes is combined to generate a fused mass for the respective object class. The fused mass for each potential object class may be calculated using equation 6.

At 410, a probability for each potential obj ect class is determined based on the fused mass related to each potential object class. The probability will be used to assign an object class to the object. The probability for each potential object class is calculated using a belief parameter (e.g., equation 7) and a plausibility parameter (e.g., equation 8). The belief parameter and the plausibility parameter are averaged (e.g., equation 9) to determine the probability for each potential object class. Additionally, a low-pass filter may be applied (e.g., equation 10) to stabilize the object class over time.

At 412, the assigned object class is selected for the object based on the probability of a potential object class exceeding a decision threshold. The threshold may be selecting the potential object class having the highest probability, or the decision may include that a probability of the potential object class must be above a threshold value.

At 414, the assigned object class of the object is output to a semi-autonomous or autonomous driving system of a vehicle to control operation of the vehicle. The assigned object class may be used to adjust a bounding box for the object, track the object, dictate driving policies, or otherwise predict behavior of the object. An object class, assigned in this manner, may add accuracy to the decisions other vehicle systems make better navigate the environment.

ADDITIONAL EXAMPLES

Some additional examples for fusion of object classes are provided below.

Example 1: A method comprising: obtaining first sensor data from a first sensor and second sensor data from a second sensor that is a different type of sensor than the first sensor, the first sensor and the second sensor having at least partially overlapping fields of view; determining, for an object in the at least partially overlapping fields of view, a set of first masses based on the first sensor data, each first mass in the set of first masses being associated with assigning a respective object class from a set of potential object classes to the object; determining, for the object in the at least partially overlapping fields of view, a set of second masses based on the second sensor data, each second mass in the set of second masses being associated with assigning a respective object class from the set of potential object classes to the object; combining the respective first mass and the respective second mass of the respective object class from the set of potential object classes to generate a fused mass for the respective object class; determining, based on the fused mass of each object class in the set of potential object classes, a probability for each object class being an assigned object class for the object; selecting, based on a respective probability of an object class exceeding a decision threshold, the respective object class associated with the respective probability to be the assigned object class of the object; and outputting, to a semi-autonomous or autonomous driving system of a vehicle, the assigned object class of the object to control operation of the vehicle.

Example 2: The method of example 1, wherein the first sensor data and the second sensor data comprise: an initial object class assigned to the object; and contextual information that is categorized as evidence factors and trust factors.

Example 3: The method of any one of the preceding examples, wherein: the evidence factors comprise motion cues related to the object and size cues related to the object; and the trust factors comprise: a stability value of the initial object class; an existence probability related to an existence of the object; a failsafe probability related to a performance of a respective sensor; and a field of view probability related to an accuracy of the initial object class based on where in a field of view of the respective sensor the object is located.

Example 4: The method of any one of the preceding examples, wherein determining the set of first masses and the set of second masses comprises: determining a first probability of the initial object class obtained from the respective sensor data; determining a second probability based on the evidence factors of the respective sensor data; determining a third probability based on the trust factors of the respective sensor data; and combining the first probability, the second probability, and the third probability to generate the set of masses for the respective sensor.

Example 5: The method of any one of the preceding examples, wherein determining the second probability comprises: determining, for each class in the set of potential classes, a motion probability based on the motion cues; determining, for each class in the set of potential classes, a size probability based on the size cues; and combining the motion probability and the size probability.

Example 6: The method of any one of the preceding examples, wherein determining the third probability comprises: determining, for each class in the set of potential classes, the existence probability; determining, for each class in the set of potential classes, the failsafe probability; determining, for each class in the set of potential classes, the field of view probability; and combining the existence probability, the failsafe probability, and the field of view probability.

Example 7: The method of any one of the preceding examples, wherein Dempster's combination rule is used to combine the respective first mass and the respective second mass of the object class.

Example 8: The method of any one of the preceding examples, wherein determining the probability for each object class being the assigned object class for the object comprises: calculating, based on the fused mass of each object class in the set of potential object classes, a belief parameter and a plausibility parameter related to the object class; and averaging the belief parameter and the plausibility parameter.

Example 9: The method of any one of the preceding examples, wherein calculating the belief parameter for a particular object class comprises: determining all subsets in the set of potential object classes that include the particular object class; and summing the fused masses of all the subsets that include the particular object class.

Example 10: The method of any one of the preceding examples, wherein calculating the plausibility parameter for a particular object class comprises: determining non-zero intersections of the particular object class with other object classes; and summing the fused masses of all object classes having the non-zero intersection.

Example 11: The method of any one of the preceding examples, further comprising: implementing a low-pass filter on the average of the belief parameter and the plausibility parameter to stabilize a respective object class temporally.

Example 12: The method of any one of the preceding examples, wherein the set of potential object classes comprises: car; truck; motorcycle; bicycle; and pedestrian.

Example 13: The method any one of the preceding examples, wherein the set of potential object classes further comprise potential power classes, the potential power classes including: car or truck; motorcycle or bicycle; bicycle or pedestrian; motorcycle or pedestrian; and undetermined.

Example 14: A system comprising: one or more processors configured to: obtain first sensor data from a first sensor and second sensor data from a second sensor that is a different type of sensor than the first sensor, the first sensor and the second sensor having at least partially overlapping fields of view; determine, for an object in the at least partially overlapping fields of view, a set of first masses based on the first sensor data, each first mass in the set of first masses being associated with assigning a respective object class from a set of potential object classes to the object; determine, for the object in the at least partially overlapping fields of view, a set of second masses based on the second sensor data, each second mass in the set of second masses being associated with assigning a respective object class from the set of potential object classes to the object; combine the respective first mass and the respective second mass of the respective object class from the set of potential object classes to generate a fused mass for the respective object class; determine, based on the fused mass of each object class in the set of potential object classes, a probability for each object class being an assigned object class for the object; select, based on a respective probability of an object class exceeding a decision threshold, the respective object class associated with the respective probability to be the assigned object class of the object; and output, to a semi-autonomous or autonomous driving system of a vehicle, the assigned object class of the object to control operation of the vehicle.

Example 15: The system of any one of the preceding examples, wherein the first sensor data and the second sensor data comprise: an initial object class assigned to the object; and contextual information that is categorized as evidence factors and trust factors.

Example 16: The system of any one of the preceding examples, wherein: the evidence factors comprise motion cues related to the object and size cues related to the object; and the trust factors comprise: a stability value of the initial object class; an existence probability related to an existence of the object; a failsafe probability related to a performance of a respective sensor; and a field of view probability related to an accuracy of the initial object class based on where in a field of view of the respective sensor the object is located.

Example 17: The system of any one of the preceding examples, wherein the one or more processors are configured to determine the set of first masses and the set of second masses by at least: determining a first probability of the initial object class obtained from the respective sensor data; determining a second probability based on the evidence factors of the respective sensor data; determining a third probability based on the trust factors of the respective sensor data; and combining the first probability, the second probability, and the third probability to generate the set of masses for the respective sensor.

Example 18: The system of any one of the preceding examples, wherein determining the second probability comprises: determining, for each class in the set of potential classes, a motion probability based on the motion cues; determining, for each class in the set of potential classes, a size probability based on the size cues; and combining the motion probability and the size probability.

Example 19: The system of any one of the preceding examples, wherein determining the third probability comprises: determining, for each class in the set of potential classes, the existence probability; determining, for each class in the set of potential classes, the failsafe probability; determining, for each class in the set of potential classes, the field of view probability; and combining the existence probability, the failsafe probability, and the field of view probability.

Example 20: A computer-readable media comprising instructions that, when executed, cause a processor to: obtain first sensor data from a first sensor and second sensor data from a second sensor that is a different type of sensor than the first sensor, the first sensor and the second sensor having at least partially overlapping fields of view; determine, for an object in the at least partially overlapping fields of view, a set of first masses based on the first sensor data, each first mass in the set of first masses being associated with assigning a respective object class from a set of potential object classes to the object; determine, for the object in the at least partially overlapping fields of view, a set of second masses based on the second sensor data, each second mass in the set of second masses being associated with assigning a respective object class from the set of potential object classes to the object; combine the respective first mass and the respective second mass of the respective object class from the set of potential object classes to generate a fused mass for the respective object class; determine, based on the fused mass of each object class in the set of potential object classes, a probability for each object class being an assigned object class for the object; select, based on a respective probability of a respective object class exceeding a decision threshold, the respective object class associated with the respective probability to be the assigned object class of the object; and output, to a semi-autonomous or autonomous driving system of a vehicle, the assigned object class of the object to control operation of the vehicle.

CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims.

The use of "or" and grammatically related terms indicates non-exclusive alternatives without limitation unless the context clearly dictates otherwise. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

**Claims**

1. A method comprising:

    obtaining first sensor data from a first sensor and second sensor data from a second sensor that is a different type of sensor than the first sensor, the first sensor and the second sensor having at least partially overlapping fields of view;
    determining, for an object in the at least partially overlapping fields of view, a set of first masses based on the first sensor data, each first mass in the set of first masses being associated with assigning a respective object class from a set of potential object classes to the object;
    determining, for the object in the at least partially overlapping fields of view, a set of second masses based on the second sensor data, each second mass in the set of second masses being associated with assigning a respective object class from the set of potential object classes to the object;
    combining the respective first mass and the respective second mass of the respective object class from the set of potential object classes to generate a fused mass for the respective object class;
    determining, based on the fused mass of each object class in the set of potential object classes, a probability for each object class being an assigned object class for the object;
    selecting, based on a respective probability of an object class exceeding a decision threshold, the respective object class associated with the respective probability to be the assigned object class of the object; and
    outputting, to a semi-autonomous or autonomous driving system of a vehicle, the assigned object class of the object to control operation of the vehicle.

2. The method of claim 1, wherein the first sensor data and the second sensor data comprise:

    an initial object class assigned to the object; and
    contextual information that is categorized as evidence factors and trust factors.

3. The method of claim 2, wherein:

    the evidence factors comprise motion cues related to the object and size cues related to the object; and
    the trust factors comprise:

        a stability value of the initial object class;

an existence probability related to an existence of the object;
a failsafe probability related to a performance of a respective sensor; and
a field of view probability related to an accuracy of the initial object class based on where in a field of view of the respective sensor the object is located.

4. The method of claim 3, wherein determining the set of first masses and the set of second masses comprises:

determining a first probability of the initial object class obtained from the respective sensor data;
determining a second probability based on the evidence factors of the respective sensor data;
determining a third probability based on the trust factors of the respective sensor data; and
combining the first probability, the second probability, and the third probability to generate the set of masses for the respective sensor.

5. The method of claim 4, wherein determining the second probability comprises:

determining, for each class in the set of potential classes, a motion probability based on the motion cues;
determining, for each class in the set of potential classes, a size probability based on the size cues; and
combining the motion probability and the size probability.

6. The method of claim 4, wherein determining the third probability comprises:

determining, for each class in the set of potential classes, the existence probability;
determining, for each class in the set of potential classes, the failsafe probability;
determining, for each class in the set of potential classes, the field of view probability; and
combining the existence probability, the failsafe probability, and the field of view probability.

7. The method of any one of the preceding claims, wherein Dempster's combination rule is used to combine the respective first mass and the respective second mass of the object class.

8. The method of any one of the preceding claims, wherein determining the probability for each object class being the assigned object class for the object comprises:

calculating, based on the fused mass of each object class in the set of potential object classes, a belief parameter and a plausibility parameter related to the object class; and
averaging the belief parameter and the plausibility parameter.

9. The method of claim 8, wherein calculating the belief parameter for a particular object class comprises:

determining all subsets in the set of potential object classes that include the particular object class; and
summing the fused masses of all the subsets that include the particular object class.

10. The method of claim 8, wherein calculating the plausibility parameter for a particular object class comprises:

determining non-zero intersections of the particular object class with other object classes;
and
summing the fused masses of all object classes having the non-zero intersections.

11. The method of claim 8, further comprising:
implementing a low-pass filter on the average of the belief parameter and the plausibility parameter to stabilize a respective object class temporally.

12. The method of any one of the preceding claims, wherein the set of potential object classes comprises:

car;
truck;
motorcycle;
bicycle; and
pedestrian.

13. The method claim 12, wherein the set of potential object classes further comprise potential power classes, the potential power classes including:

    car or truck;
    motorcycle or bicycle;
    bicycle or pedestrian;
    motorcycle or pedestrian; and
    undetermined.

14. A system comprising:
one or more processors configured to perform any one of the methods of claims 1 to 13.

15. A computer-readable media comprising instructions that, when executed, cause a processor to perform any one of the methods of claims 1 to 13.

*FIG. 1*

200

| Controller 202 | Sensor-Fusion System 104-1 |
|---|---|
| Processor 204-1 | Vision Interface 106-1 |
| Computer-Readable Storage Media 206-1 | Radar Interface 106-2 |
| Automotive Module 208 | Processor 204-2 |
| | Computer-Readable Storage Media 206-2 |
| | Class Fusion Module 108-1 |
| | Fused Object Class Data Store 110-1 |
| | Object Track Fusion Module 210 |

Link 212

*FIG. 2*

EP 4 485 377 A1

300

**Class Fusion Module**
**108-2**

**Input Processing Module**
**306**

Frame of
Discernment
**310**

Basic Belief
Assignment
**312**

**Class Assignment Module**
**308**

Mass Fusion
**314**

Probability
Calculation
**316**

Vision Data
**302**

Radar Data
**304**

Assigned
Object Classes
**318**

*FIG. 3*

400

Obtain first sensor data and second sensor data
402

Determine a set of first masses based on the first sensor data
404

Determine a set of second masses based on the second sensor data
406

Combine the respective first mass and the respective second mass of the respective object class to generate a fused mass for the respective object class
408

Determine, based on the fused mass, a probability for each object class
410

Select, based on the respective probability exceeding a decision threshold, the assigned object class
412

Output the assigned object class
414

*FIG. 4*

Europäisches
Patentamt

European
Patent Office

Office européen
des brevets

# EUROPEAN SEARCH REPORT

Application Number

EP 23 19 1273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAVEZ-GARCIA R OMAR ET AL: "Fusion framework for moving-object classification", PROCEEDINGS OF THE 16TH INTERNATIONAL CONFERENCE ON INFORMATION FUSION, ISIF ( INTL SOCIETY OF INFORMATION FUSI, 9 July 2013 (2013-07-09), pages 1159-1166, XP032512586, ISBN: 978-605-86311-1-3 [retrieved on 2013-10-18] * the whole document * ----- | 1-15 | INV. G06V10/80 G06V20/58 G06F18/25 |
| X | LEMERET Y. ET AL: "Evidence Theory for Data Fusion in Transportation Systems", 5TH IFAC SYMPOSIUM ON MODELLING AND CONTROL IN BIOMEDICAL SYSTEMS 2003, MELBOURNE, AUSTRALIA, 21-23 AUGUST 2003, vol. 37, no. 19, 1 October 2004 (2004-10-01), pages 81-86, XP093123839, ISSN: 1474-6670, DOI: 10.1016/S1474-6670(17)30663-8 * the whole document * ----- | 1-15 | |
| X | CAPELLIER EDOUARD ET AL: "Evidential grid mapping, from asynchronous LIDAR scans and RGB images, for autonomous driving", 2018 21ST INTERNATIONAL CONFERENCE ON INTELLIGENT TRANSPORTATION SYSTEMS (ITSC), IEEE, 4 November 2018 (2018-11-04), pages 2595-2602, XP033470297, DOI: 10.1109/ITSC.2018.8569710 ISBN: 978-1-7281-0321-1 [retrieved on 2018-12-07] * the whole document * ----- -/-- | 1-15 | TECHNICAL FIELDS SEARCHED (IPC) G06F G06V |

The present search report has been drawn up for all claims

| Place of search | Date of completion of the search | Examiner |
|---|---|---|
| The Hague | 26 January 2024 | Grigorescu, Cosmin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

# EUROPEAN SEARCH REPORT

Application Number

EP 23 19 1273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 618 453 B2 (APTIV TECH LTD [BB]) 4 April 2023 (2023-04-04) * the whole document * | 1-15 | |

TECHNICAL FIELDS SEARCHED (IPC)

The present search report has been drawn up for all claims

| Place of search | Date of completion of the search | Examiner |
|---|---|---|
| The Hague | 26 January 2024 | Grigorescu, Cosmin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 1273**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-01-2024**

| Patent document cited in search report | | Publication date | Patent family member(s) | | Publication date |
|---|---|---|---|---|---|
| US 11618453 | B2 | 04-04-2023 | CN | 114973645 A | 30-08-2022 |
| | | | CN | 117373245 A | 09-01-2024 |
| | | | EP | 4047564 A1 | 24-08-2022 |
| | | | US | 2022274601 A1 | 01-09-2022 |
| | | | US | 2023192094 A1 | 22-06-2023 |

EPO FORM P0459

For more details about this annex : see Official Journal of the European Patent Office, No. 12/82